# EUROPEAN PATENT APPLICATION

(11) **EP 4 418 282 A1**
(43) Date of publication of application: **21.08.2024**
(21) Application number: 22880935.6
(22) Date of filing: 07.10.2022
(51) Int. Cl.: H01B 1/04, H01B 1/24, C01B 32/00, C09C 1/48, H01M 4/62

(54) **MIXED CARBON BLACK AND ELECTRODE SLURRY**

(30) Priority: 13.10.2021 JP 2021168238
(71) Applicant: Asahi Carbon Co., Ltd., Niigata-shi, Niigata 950-0883 (JP)
(72) Inventor: ARIMITSU, Nozomi, Niigata-shi, Niigata 950-0883 (JP); YAMAGUCHI, Togo, Niigata-shi, Niigata 950-0883 (JP)
(74) Representative: D Young & Co LLP
(86) International application number: PCT/JP2022/037553
(87) International publication number: WO 2023/063240

(57) **Abstract**

The object of the present invention is to provide a carbon black that can easily make an electrode slurry used for secondary batteries and the like highly viscous to increase the shear stress, thus improving the dispersibility of blended materials, and an electrode slurry that can be easily made highly viscous to increase the shear stress for improving dispersibility of blended materials. A mixed carbon black comprising mixed two types of carbon blacks, the carbon blacks comprising a first carbon black and a second carbon black having different specific surface areas, wherein the second carbon black is a porous carbon black and the specific surface area of the first carbon black is smaller than that of the second porous carbon black, and wherein the value calculated by the following formula (I) is 120 to 350 m²/g, and the value of (N2SA(2) - N2SA(1)) in the following formula (I) is 140 to 650 m²/g when the specific surface area of the first carbon black is N2SA(1) m²/g and the specific surface area of the second carbon black is N2SA(2) m²/g. (N2SA(2) - N2SA(1)) × mass of second carbon black/(mass of first carbon black + mass of second carbon black)

## Description

### Technical Field

The present invention relates to a carbon black and an electrode slurry useful for an electrode of secondary batteries.

### Background Art

In recent years, secondary batteries have been used in a very wide range of fields and industries, including electric vehicles and mobile phones. As the use expand, the demand for higher energy density, higher power density, or faster charge/discharge performance is also increasing under the current circumstances, and various components are being actively developed to meet the demand.

One of the components attracting attention is an electrode slurry that contains a conductive material and other blended materials, and is applied to current-collecting foils, and particularly, improvement of the dispersibility of blended materials in slurry has been raised as one of the objects of concern. Improved dispersibility has the effect of increasing the efficiency of conductive path formation and improving the performance of secondary batteries, which is the final product, and therefore, as one of the measures, there is an idea to improve dispersibility by, for example, making the slurry highly viscous to increase the shear stress for disintegrating aggregation of each blended material.

Various studies have been made to make slurry highly viscous, and typically, measures have been taken by increasing the ratio of solid contents of slurry, making a binder itself a high viscosity type, improving the concentration of carbon black by adding a dispersing agent, and making some improvements in production such as a blending method, and the like (Patent Document 1).

However, there is a problem that the ratio of solid contents cannot be easily changed because it is closely related to the blending system, and the amount of added binder, in particular, cannot be easily adjusted because there is little freedom of choice in factors such as degree of solubility. Also, if the concentration is simply increased, there are problems such as a loss of fluidity and handling capability is worsened until the slurry is placed in a slurry stirring container.

In addition, if some improvements in production are made, the conditions are similarly naturally limited, and in some cases, specialized equipment such as a separate mixer is required, so it cannot be said to be easily applicable.

### Prior Art Document

### Patent Document

Patent Document 1: Japanese unexamined Patent Application Publication No. 2020-21632

### Summary of the Invention

### Object to be Solved by the Invention

The object of the present invention is to solve the problems of the conventional technologies and to provide a carbon black that can easily make an electrode slurry used for secondary batteries and the like highly viscous to increase the shear stress, thus improving the dispersibility of blended materials, and an electrode slurry that can be easily made highly viscous to increase the shear stress for improving dispersibility of blended materials.

### Means to Solve the Object

As a result of intensive studies, the present inventors have found that the object can be solved by using a combination of an ordinary carbon black and a porous carbon black, and by setting the relationship between the degree of porosity and the blending ratio of the porous carbon black in the combination to a specific range. When a porous carbon black is used, the proportion of micropores in the total carbon black increases. However, since the solvent does not penetrate the micropores during slurrying, the overall density is reduced and the centrifugal force during stirring is weakened. This negatively affects the dispersibility of the carbon black, impedes conductive path formation, and eventually reduces the battery performance. Thus, no attempt has been made so far to use a porous carbon black to increase dispersibility by attaining high viscosity. Therefore, in the conventional technology, no example has been found of an attempt of making slurry highly viscous while maintaining properties of carbon black as a conductive material by arbitrarily controlling and specifying the blending ratio of carbon black as a blended material, especially the blending ratio of ordinary carbon black and porous carbon black, and the degree of porosity of the porous carbon black to an appropriate range. In addition, the present invention presents the optimal conditions therefor, and achieves remarkable effects that cannot be attained with conventional methods.

That is, the present invention is specified by the items below.
[1] A mixed carbon black comprising mixed two types of carbon blacks, the carbon blacks comprising a first carbon black and a second carbon black having different specific surface areas, wherein the second carbon black is a porous carbon black and the specific surface area of the first carbon black is smaller than that of the second porous carbon black, and wherein the value calculated by the following formula (I) is 120 to 350 m²/g, and the value of (N2SA(2) - N2SA(1)) in the following formula (I) is 140 to 650 m²/g, when the specific surface area of the first carbon black is N2SA(1) m²/g and the specific surface area of the second carbon black is N2SA(2) m²/g. (N2SA(2) - N2SA(1)) × mass of second carbon black/(mass of first carbon black + mass of second carbon black)
[2] The mixed carbon black according to above [1], wherein the first carbon black is a carbon black not treated for activation and the second carbon black is a carbon black treated for activation to be made porous.
[3] An electrode slurry comprising a first carbon black and a second carbon black having different specific surface areas, and a binder, wherein the second carbon black is a porous carbon black and the specific surface area of the first carbon black is smaller than that of the second carbon black, and wherein the value calculated by the following formula (I) is 120 to 350 m²/g, and the value of (N2SA(2) - N2SA(1)) in the following formula (I) is 140 to 650 m²/g when the specific surface area of the first carbon black is N2SA(1) m²/g and the specific surface area of the second carbon black is N2SA(2) m²/g. (N2SA(2) - N2SA(1)) × mass of second carbon black/(mass of first carbon black + mass of second carbon black)

### Effect of the Invention

According to the present invention, a carbon black that can efficiently improve the viscosity of an electrode slurry used for electrodes of secondary batteries and the like, and can easily make an electrode slurry highly viscous can be provided. In addition, according to the present invention, an electrode slurry used for electrodes for secondary batteries and the like that can be easily made highly viscous can be provided. The carbon black and the electrode slurry of the present invention can be made highly viscous, which improves the dispersibility of blended materials by increasing shear stress, thereby enhancing the battery performance.

### Mode of Carrying Out the Invention

The present invention above will be described in detail below.

The mixed carbon black of the present invention is a mixed carbon black comprising mixed two types of carbon blacks, the carbon blacks comprising a first carbon black and a second carbon black having different specific surface areas wherein the second carbon black is a porous carbon black and the specific surface area of the first carbon black is smaller than the specific area of the second porous carbon black, and wherein the value calculated by the following formula (I) is 120 to 350 m²/g, and the value of (N2SA(2) - N2SA(1)) in the following formula (I) is 140 to 650 m²/g, when the specific surface area of the first carbon black is N2SA(1) m²/g and the specific surface area of the second carbon black is N2SA(2) m²/g. (N2SA(2) - N2SA(1)) × mass of second carbon black/(mass of first carbon black + mass of second carbon black)

The first carbon black and the second carbon black in the present invention are not specifically restricted in terms of type, manufacturing method, and the like thereof, and for example, those manufactured by the oil furnace method, the acetylene decomposition method, the thermal method and the channel method can be used. The particle size, shape, and the like thereof are also not specifically restricted if they can be used for electrodes. The second carbon black in the present invention can be obtained, for example, by making carbon black produced with the above production method porous through treatment for activation by contacting the carbon black with steam, carbon dioxide, and the like under high temperature. The treatment for activation can be any treatment generally performed on carbon black, and conditions and the like thereof are not restricted provided that the second carbon black satisfying the condition of formula (I) can be obtained in relation to the first carbon black.

Formula (I) is an indicator of the dispersibility of carbon black in a slurry system and is a value obtained from (N2SA(2)-N2SA(1)) (hereinafter also referred to as "ΔN2SA") described below and the blending ratio of the first carbon black and the second carbon black. Herein, the blending ratio is a ratio of the mass of the second carbon black to the total mass of the first carbon black and the second carbon black. N2SA (1) and N2SA (2) in formula (I) are the specific surface area per unit mass that are measured with the method described in JIS K6217-7:2013, and the unit is expressed in m²/g. In the present invention, the value calculated by formula (I) is 120 to 350 m²/g. When the value calculated by formula (I) is less than 120, the difference in the specific surface area between the first carbon black and the second porous carbon black is insufficient or the ratio of the second porous carbon black is too low to contribute to improving the viscosity of a slurry when the slurry is produced by mixing with a binder. When the value calculated by formula (I) is greater than 350, the specific surface area of the second porous carbon black is too large or the blending ratio of the second porous carbon black is too high, causing the binder to thicken excessively, which significantly hinders producibility of the slurry and workability in the subsequent production process.

(N2SA(2)-N2SA(1)) in formula (I) is an indicator of porosity of the carbon black surface and is a value obtained by the difference in specific surface area between the second carbon black and the first carbon black. (N2SA(2)-N2SA(1)) in the present invention is 140 to 650 m²/g. In the case of less than 140, the pores are developed insufficiently and do not contribute to improving viscosity of the binder. In case of more than 650, the pores are developed excessively causing an excessive increase in the viscosity of the binder, which significantly hinders producibility. The mixed carbon black in the present invention may contain carbon blacks other than the first carbon black and the second carbon black within the range that does not impede the effect of the present invention. In this case, the sum of the first carbon black and the second carbon black in the total carbon black is preferably 70 to 100% by mass, more preferably 80 to 100% by mass, and further more preferably 90 to 100% by mass.

The electrode slurry of the present invention comprises a first carbon black and a second carbon black having different specific surface areas, and a binder, wherein the second carbon black is a porous carbon black, and the specific surface area of the first carbon black is smaller than the specific area of the second carbon black, and wherein the value calculated by the following formula (I) is 120 to 350 m²/g, and the value of (N2SA(2) - N2SA(1)) in the following formula (I) is 140 to 650 m²/g, when the specific surface area of the first carbon black is N2SA(1) m²/g and the specific surface area of the second carbon black is N2SA(2) m²/g. (N2SA(2) - N2SA(1)) × mass of second carbon black/(mass of first carbon black + mass of second carbon black)

As for the first carbon black and the second carbon black used in the electrode slurry of the present invention, the same carbon black as described above for the mixed carbon black of the present invention can be used. In the electrode slurry of the present invention, the first carbon black and the second carbon black in the present invention may be mixed to be added to a binder, or they may be added separately to the binder. There are no specific restrictions on binders used in the electrode slurry of the present invention if they are the binders used for an electrode slurry for secondary batteries and the like. For example, binders of polyvinylidene fluoride, polyimide, SBR (styrene-butadiene rubber), and polyacrylic acid can be listed. To the electrode slurry of the present invention, other components used for an electrode slurry, such as an active material, a conductivity aid, a viscosity modifier, may be added, and carbon blacks other than the first carbon black and the second carbon black in the present invention may be added within the range that does not impede the effect of the present invention. When other carbon blacks are added, the sum of the first carbon black and the second carbon black in the total carbon black is preferably 70 to 100% by mass, more preferably 80 to 100% by mass, and further more preferably 90 to 100% by mass. The electrode slurry of the present invention can be produced by adding the first carbon black and the second carbon black in the present invention, and other ingredients if necessary to the binder, stirring and mixing.

### Examples

The present invention will be further described in detail by showing examples and comparative examples below, but the present invention is no way limited thereto.

### [Production of porous carbon black (second carbon black)]

100 g of untreated carbon black (N2SA: 54 m²/g, STSA: 54 m²/g) which is not treated for activation was placed in a cylindrical kiln with an inner diameter of 10 cm and a length of 20 cm and steam-treated for activation at 850°C under the treatment conditions shown in Table 1 to produce each of the carbon blacks CB-A to CB-E. The physicochemical properties of the resulting porous carbon blacks CB-A to CB-E and an untreated carbon black are shown in Table 2.

**[Table 1]**

| | CB-A | CB-B | CB-C | CB-D | CB-E |
|---|---|---|---|---|---|
| Activation time (hr) | 3.2 | 9.1 | 14.8 | 0.7 | 21.7 |

**[Table 2]**

| | | | | | | |
|---|---|---|---|---|---|---|
| CB (Carbon black) | Untreated | CB-A | CB-B | CB-C | CB-D | CB-E |
| Specific surface area (m²/g) | 54 | 195 | 412 | 689 | 100 | 838 |
| ΔN2SA (m²/g) | 0 | 141 | 358 | 635 | 46 | 784 |

Each of the properties shown in Table 2 above was measured by the following method.

### [Specific surface area (nitrogen adsorption specific surface area)]

Specific surface area in Table 2 is a specific surface area per unit mass (m²/g) and was measured according to the method described in JIS K6217-7:2013.

### [ΔN2SA]

ΔN2SA is the difference between the specific surface area of each of the porous carbon black (CB-A to CB-E) after treated for activation and the specific surface area of the untreated carbon black.

Using each of the carbon blacks shown in Table 2, electrode slurries were prepared and evaluated according to the following procedure. The measurement results of the viscosity thereof are shown in Table 3.

### [Method of preparing electrode slurry]

Mixed carbon blacks of examples 1 to 3 and comparative examples 1 to 5 were prepared by mixing the untreated carbon black and each of the porous carbon blacks. The prepared mixed carbon black and the binder were measured and placed in a stirring container so that the mass ratio of the mixed carbon black to the binder was 1 : 5, and the mixture was stirred with a planetary centrifugal mixer ("THINKYMIXER ARV-310" produced by THINKY CORPORATION) at 2000 rpm/20 min. As the binder, KF Polymer L#1120 (PVdF/NMP solution produced by KUREHA CORPORATION), a commonly used binder, was used. The resulting slurry was used as the sample for viscosity measurement.

**[Table 3]**

| | Reference example | Example 1 | Example 2 | Example 3 |
|---|---|---|---|---|
| Type of CB | Untreated | CB-A | CB-B | CB-C |
| Value of formula (I) | - | 127 | 215 | 318 |
| Viscosity (Index) | 100 | 1500 | 2500 | 3000 |

**[Table 4]**

| | Comparative example 1 | Comparative example 2 | Comparative example 3 | Comparative example 4 | Comparative example 5 |
|---|---|---|---|---|---|
| Type of CB | CB-D | CB-A | CB-B | CB-C | CB-E |
| Value of formula (I) | 23 | 70 | 107 | 95 | 157 |
| Viscosity (Index) | 300 | 500 | 700 | 800 | 400 |

### "Value of formula (I)"

"Value of formula (I)" in Tables 3 and 4 above is the value calculated by formula (I) in the present invention, with the untreated carbon black as the first carbon black and the specific surface area thereof as N2SA (1), and with each of the porous carbon blacks as the second carbon black and the specific surface area thereof as N2SA (2).

### "Viscosity (Index)"

"Viscosity (Index)" in Tables 3 and 4 above is the index of the viscosity of each of the slurries determined by measuring the viscosity of slurries according to the method below with the reference example as 100.

### [Method of viscosity measurement]

A cone-plate rotational viscometer ("Viscotester VT550" by HAAKE) was used. The temperature was controlled at 25°C in a thermostatic bath, and the viscosity was measured at a rotational speed of 1 rpm using a predetermined amount of slurry.

As clearly demonstrated by the evaluation results in Table 3, the electrode slurry made with the mixed carbon black of the present invention exhibited higher viscosity than the electrode slurry made with the mixed carbon black of the comparative examples and the untreated carbon black of the reference example. Thus, the shear stress of the electrode slurry is increased and the conductive performance is improved due to improved dispersibility of blended materials. This contributes to improvement of the battery performance.

### Industrial Applicability

The mixed carbon black of the present invention can be preferably used as a conductive material for use in an electrode slurry of secondary batteries and the like, and the electrode slurry of the present invention can be preferably used as an electrode slurry of secondary batteries, and the like.

## Claims

1. A mixed carbon black comprising mixed two types of carbon blacks, the carbon blacks comprising a first carbon black and a second carbon black having different specific surface areas, wherein the second carbon black is a porous carbon black and the specific surface area of the first carbon black is smaller than the specific area of the second porous carbon black, and wherein the value calculated by the following formula (I) is 120 to 350 m²/g, and the value of (N2SA(2) - N2SA(1)) in the following formula (I) is 140 to 650 m²/g, when the specific surface area of the first carbon black is N2SA(1) m²/g and the specific surface area of the second carbon black is N2SA(2) m²/g. (N2SA(2) - N2SA(1)) × mass of second carbon black/(mass of first carbon black + mass of second carbon black)

2. The mixed carbon black according to claim 1, wherein the first carbon black is a carbon black not treated for activation and the second carbon black is a carbon black treated for activation to be made porous.

3. An electrode slurry comprising a first carbon black and a second carbon black having different specific surface areas, and a binder, wherein the second carbon black is a porous carbon black, and the specific surface area of the first carbon black is smaller than the specific area of the second carbon black, and wherein the value calculated by the following formula (I) is 120 to 350 m²/g, and the value of (N2SA(2) - N2SA(1)) in the following formula (I) is 140 to 650 m²/g, when the specific surface area of the first carbon black is N2SA(1) m²/g and the specific surface area of the second carbon black is N2SA(2) m²/g. (N2SA(2) - N2SA(1)) × mass of second carbon black/(mass of first carbon black + mass of second carbon black)
